# EUROPÄISCHE PATENTANMELDUNG

(11) **EP 4 800 053 A1**
(43) Veröffentlichungstag der Anmeldung: **02.09.2026**
(21) Anmeldenummer: 25161086.1
(22) Anmeldetag: 28.02.2025
(51) Int. Cl.: C08G 73/02

(54) **VERFAHREN ZUR HERSTELLUNG VON POLYGUANIDINEN**

(71) Anmelder: Oxford Antibiotic Group GmbH, 3430 Tulln an der Donau (AT)
(72) Erfinder: Pretsch, Alexander, 3542 Jaidhof (AT); Genov, Miroslav, 3430 Tulln an der Donau (AT)
(74) Vertreter: Ellmeyer, Wolfgang

(57) **Zusammenfassung**

Die Erfindung betrifft ein Verfahren zur Herstellung von Polykondensationsprodukten von Guanidin, Aminoguanidin oder Diaminoguanidin G mit Benzylderivaten BA nach dem folgenden Reaktionsschema: 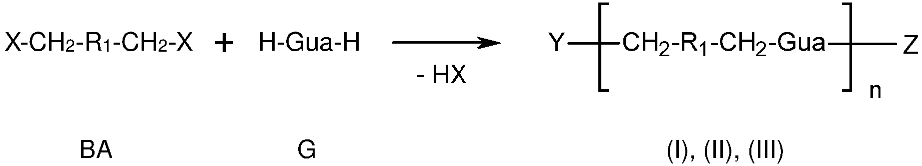 worin X für eine Abgangsgruppe steht, R₁ für ein aromatisches Ringsystem steht, Gua für einen Guanidindiyl-, Aminoguanidindiyl- oder Diaminoguanidindiyl-Rest steht, Y für H-Gua steht und Z für H steht oder Y und Z zusammen für eine chemische Bindung stehen, um eine zyklische Struktur zu ergeben, und n ≥ 2 ist; wobei die Benzylderivate BA einer Polykondensationsreaktion mit einem Überschuss an G unterzogen werden, dadurch gekennzeichnet, dass
die Benzylderivate BA und das Guanidin G in einem hochsiedenden, polaren aprotischen Lösungsmittel suspendiert und auf eine Temperatur von zumindest 150 °C erhitzt und dabei gelöst werden, wonach das Reaktionsgemisch abgekühlt und entweder a) mit einem Nicht-Lösungsmittel für das Polyguanidin versetzt wird, um das Produkt auszufällen und in fester Form zu erhalten, oder b) mit einem Gemisch aus Wasser und einem mit Wasser nicht mischbaren apolaren Lösungsmittel versetzt und extrahiert wird, um eine wässrige Lösung des Produkts zu erhalten.

## Beschreibung

Die vorliegende Erfindung betrifft ein neues Verfahren zur Herstellung von Polyguanidinen, auf diese Weise hergestellte Polykondensationsprodukte und deren Verwendung als antimikrobielle oder antiinfektive Mittel.

### STAND DER TECHNIK

Polyguanidine der nachstehenden allgemeinen Formel wie auch diverse Derivate davon sind seit langem bekannt.

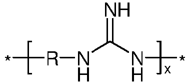

In der Patentliteratur wurden bereits 1943 im US-Patent 2.325.586 mehrere Herstellungsverfahren verschiedener Polyguanidine durch Polykondensation von i) Guanidin oder Salzen davon, ii) Cyanhalogeniden, iii) Dicyanamiden oder iv) Isocyaniddihalogeniden mit Diaminen oder v) zweier Dicyandiamide miteinander (was Cyano-substituierte Polyguanidine ergibt), sowie die Verwendung der so erzeugten Polyguanidine als Färbehilfsmittel beschrieben:
i) 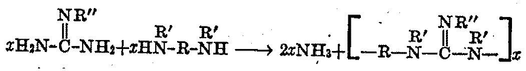
ii) 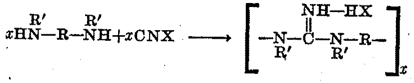
iii) 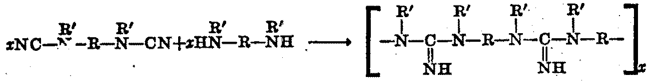
iv) 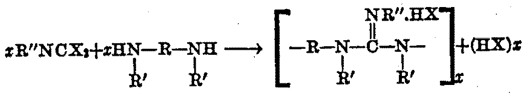
v)

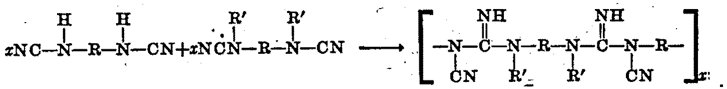

Als Diamine in den Reaktionen i) bis iv) wurden bereits damals sowohl Alkylen- und Phenylendiamine als auch Oxyalkylen- oder Polyetherdiamine, wie sie später auch als Jeffamine^{®} bekannt werden sollten, offenbart.

Jahrzehnte später haben sich derartige Polyguanidine auch als ausgezeichnete Biozide erwiesen. So offenbart eine Gruppe um Oskar Schmidt in WO 99/54291 A1 die Herstellung von mikrobioziden Polyhexamethylenguanidinen, in WO 01/85676 A1 biozide Polyguanidine, die durch Kondensation von Guanidin mit Polyoxyalkylenen hergestellt werden, und in WO 2006/047800 A1 als Biozide, insbesondere als Fungizide, wirkende Polyguanidinderivate, die durch Polykondensation von Guanidin mit einem Gemisch aus Alkylendiamin und Oxalkylendiamin gebildet werden und geringere Toxizität aufweisen sollen als die Polymere, die nur eine der beiden Arten des zweiwertigen Rests R₁ enthalten.

In WO 02/30877 A1 werden ähnliche Polyguanidine als Desinfektionsmittel beschrieben, die zusätzlich Phenylengruppierungen in den Ketten enthalten. Eine russische Forschergruppe (Tets, Tets und Krasnov) offenbart in WO 2011/043690 A1, von der US 2011/0269936 A1 und EP 2.520.605 A1 abgeleitet wurden, biozide Polyguanidine der nachstehenden Formel, die durch Polykondensation von Guanidin und Hexamethylendiamin in Gegenwart von Hydrazinhydrat hergestellt werden:

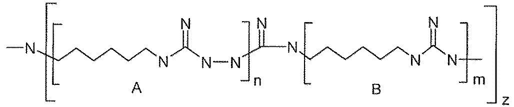

Das Hydrazin ersetzt somit während der Polykondensation - zumindest formal - eine Aminogruppe entweder nur einer oder auch zweier Guanidin-Gruppierungen, wodurch Block-Copolymere erhalten werden sollen, in denen sich Poly(hexamethylen-guanidin)-Blöcke mit Poly(hexamethylenaminoguanidin)-Blöcken abwechseln und die beiden Arten von Blöcken jeweils über Guanidin-Dimere miteinander verknüpft sind, wie nachstehend dargestellt ist:

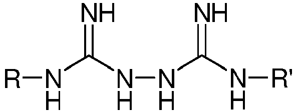

Auch diese Polymere und Säureadditionssalze davon sollen als Biozide gegen Bakterien, Viren und Pilze wirken. Allerdings finden sich in den Beispielen dieser Anmeldungen, in denen 7 verschiedene Polymere hergestellt wurden, außer der Angabe, dass jenes aus Beispiel 1 eine "feste, nahezu farblose, transparente Substanz" sei, keinerlei physikalische Daten zu den erhaltenen Produkten.

Bezüglich der möglichen Strukturen, die während der Polykondensationen von Guanidinen mit Diaminen entstehen können, existieren mehrere Artikel einer Forschergruppe der Technischen Universität Graz, z.B. Albert et al., Biomacromolecules 4(6), 1811-1817 (2003), und Feiertag et al., Macromol. Rap. Comm. 24(9), 567-570 (2003). Zusätzlich zu den verschiedenen Möglichkeiten der Terminierung der linearen Polymerketten mit jeweils einem der Ausgangsmonomere bilden sich üblicherweise in einem nicht zu vernachlässigenden Anteil, der u.a. von der Kettenlänge des Diamins abhängt, auch zyklische Moleküle der folgenden allgemeinen Formel aus:

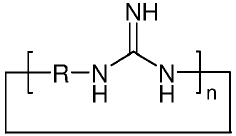

Die Hauptnachteile praktisch aller der oben beschriebenen Polyguanidin-Derivate liegen zum einen in einer nicht zu vernachlässigenden Toxizität dieser Produkte sowie - im Fall des Einsatzes hochreaktiver Komponenten - in vergleichsweise aufwändigen Herstellungsverfahren, sowie auch in der Verwendung von aus toxikologischer Sicht bekanntermaßen problematischen Komponenten wie Hydrazin, weswegen die vorliegenden Erfinder nach Lösungen zu forschen begonnen haben.

Im Zuge ihrer Forschungen hatten die Erfinder herausgefunden, dass Polykondensationsprodukte von Amino- und Diaminoguanidin mit Aminen überraschenderweise deutlich geringere Toxizität als die strukturell ähnlichen Polykondensate mit Guanidin aus den oben zitierten Dokumenten WO 2011/043690 A1, US 2011/0269936 A1 und EP 2.520.605 A1 zeigen, aber ebenfalls wirksame antimikrobielle Substanzen sind.

Diese Ergebnisse werden in den anhängigen Patentanmeldungen AT A 53/2013 und PCT/AT2014/050026 offenbart, in denen Polyguanidin-Derivate der nachstehenden Formel sowie Salze davon beansprucht werden: 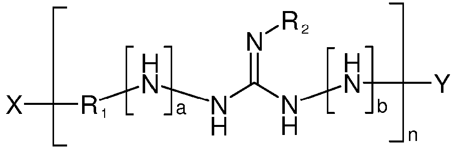 worin
X aus -NH₂, Aminoguanidino und 1,3-Diaminoguanidino ausgewählt ist;
Y aus -H und -R₁-NH₂ ausgewählt ist;
oder X und Y zusammen für eine chemische Bindung stehen, um eine zyklische Struktur zu ergeben;
R₁ aus zweiwertigen organischen Resten mit 2 bis 20 Kohlenstoffatomen ausgewählt ist, in denen gegebenenfalls ein oder mehrere Kohlenstoffatome durch O oder N ersetzt sind;
a und b jeweils 0 oder 1 sind, wobei a+b ≠ 2 ist, wenn keine 1,3-Diaminoguanidin-Einheiten enthalten sind;
R₂ aus -H und -NH₂ ausgewählt ist,
wobei
   R₂ -NH₂ ist, wenn a+b = 0 ist,
   R₂ -H oder -NH₂ ist, wenn a+b = 1 ist und
   R₂ -H ist, wenn a+b = 2 ist; und
n ≥ 2 ist.

Als Verfahren zur Herstellung dieser neuen Poly(di)aminoguanidine wurden - in Analogie zum damals bekannten Stand der Technik - entsprechende Diamine mit Amino- und/oder Diaminoguanidin durch Erhitzen polykondensiert. Da die Erfinder angenommen hatten, dass Amino- und Diaminoguanidino-Gruppierungen (nachstehend kollektiv als "Aminoguanidine" bezeichnet, sofern aus dem Kontext nichts anderes hervorgeht) für humane eukaryotische Zellen besser verträglich sind als Guanidino-Gruppierungen und insbesondere als jene Polymere, welche die oben dargestellten hydrazoverbrückten Guanidin-Dimere enthalten.

Tatsächlich wurden allerdings nur bevorzugte Ausführungsformen gemäß dem dortigen Anspruch 3 hergestellt und untersucht, in denen der Rest R₁ aus Alkylenresten ausgewählt ist, in denen zumindest ein Kohlenstoffatom durch O oder N ersetzt ist, um die Hydrophilie der Ketten zu erhöhen, genauer gesagt aus Resten der nachstehenden Formeln:

-(CH₂)_{c}-Z₁-(CH₂)_{d}-,

-(CH₂)_{c}-Z₁-(CH₂)_{d}-Z₂-(CH₂)ₑ-,

-(CH₂)_{c}-Z₁-(CH₂)_{d}-Z₂-(CH₂)ₑ-Z₃-(CH₂)_{f}-,

-(CH₂)_{c}-Z₁-(CH₂)_{d}-Z₂-(CH₂)ₑ-Z₃-(CH₂)_{f}-Z₄-(CH₂)_{g}-,

worin Z₁ bis Z₄ jeweils unabhängig voneinander für ein aus O und N ausgewähltes Heteroatom stehen und die Indizes c bis g jeweils unabhängig voneinander für eine solche ganze Zahl im Bereich von 1 bis 12 stehen, dass die Gesamtanzahl der Atome des Rests R₁ 20 nicht überschreitet.

Allerdings hatten sich auch manche dieser neuen Aminoguanidin-Verbindungen in Bezug auf antimikrobielle Wirksamkeit bzw. Toxizität nicht als vollständig zufrieden stellend erwiesen, weswegen die Arbeitsgruppe der Erfinder in AT 516.070 A1 sowie WO 2016/015081 A1 weitere, erstmals hergestellte Poly(di)aminoguanidine sowie ein neues Verfahren zu deren Herstellung offenbart hat, nämlich ein Verfahren zur Herstellung von Polykondensationsprodukten von Guanidin, Aminoguanidin oder Diaminoguanidin G mit einem oder mehreren Benzyl- oder Allyl-Derivaten BA nach dem folgenden Reaktionsschema: 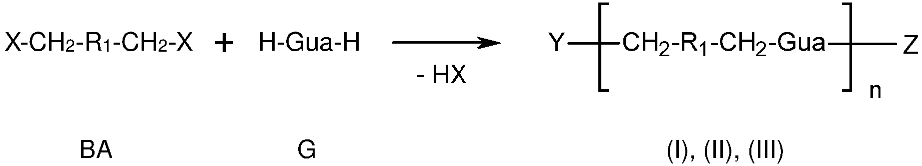 worin
X jeweils unabhängig für eine Abgangsgruppe steht;
R₁ jeweils unabhängig entweder für ein aromatisches Ringsystem mit zumindest einem aromatischen Ring, das gegebenenfalls ein oder mehrere Heteroatome, ausgewählt aus O, N und S enthält und das gegebenenfalls mit einer oder zwei Vinylgruppen substituiert ist, an die die Gruppe(n) -CH₂-X gebunden ist/sind, oder für Ethylen steht;
Gua für einen Guanidindiyl-, Aminoguanidindiyl- oder Diaminoguanidindiyl-Rest steht;
Y für H-Gua steht und
Z für H steht; oder
Y und Z zusammen für eine chemische Bindung stehen, um eine zyklische Struktur zu ergeben;
wobei zumindest ein Benzyl- oder Allyl-Derivat BA einer Polykondensationsreaktion mit einem Überschuss an Guanidin, Aminoguanidin oder Diaminoguanidin G unter Abspaltung von HX unterzogen wird, um ein Polyguanidin der nachstehenden Formel (I), (II) oder (III): 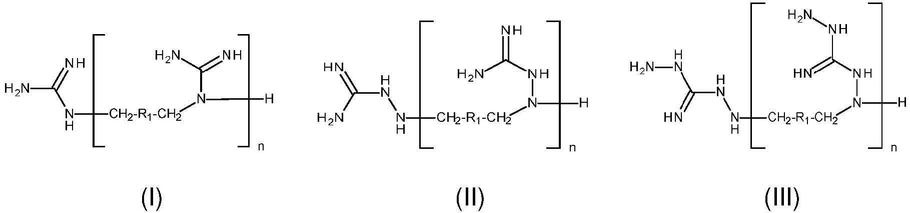
oder mit einer durch Ringschluss unter Eliminierung eines entsprechenden Guanidins erhaltenen zyklischen Struktur, oder ein Salz des jeweiligen Polyguanidins zu ergeben.

Auf diese Weise erfolgte die Polykondensation im Gegensatz zum Stand der Technik nicht unter Abspaltung von Ammoniak, sondern unter Abspaltung der Abgangsgruppe X, vorzugsweise als Halogenwasserstoff, z.B. HCl oder HBr, oder als Sulfonsäure, z.B. CH₃SO₂OH (MsOH), der/die mit den im Molekül befindlichen Amino- oder Iminogruppen Säureadditionssalze bildet, wodurch sich die Verwendung eines Säurefängers erübrigte. Und durch die Verwendung benzylischer oder allylischer Strukturen im Ausgangsmonomer BA entstanden zwar wie im Stand der Technik Gemische von Polykondensationsprodukten unterschiedlicher Strukturen, allerdings enthielten die Hauptprodukte jedoch nicht nur - wie im damaligen Stand der Technik - einfach, sondern durchwegs zweifach substituierte Stickstoffatome. Das heißt, das Stickstoffatom, das bereits mit einem Molekül BA kondensiert hatte, reagierte offenbar bevorzugt ein zweites Mal mit einem weiteren BA, so dass jeweils nur ein N-Atom des entsprechenden Monomers G in die Hauptkette des Polymers eingebunden wurde, wie in den obigen Formeln (I) bis (III) dargestellt ist.

Tatsächlich wurden damals einige Poly(di)aminoguanidine hergestellt und getestet, die als Rest R¹ einen zweiwertigen Rest von Benzol, Pyridin, Biphenyl, Divinylbenzol oder Ethylen umfassten, die sich auch als wirksamere Antibiotika erwiesen als die davor hergestellten Polyguanidine mit zwei Guanidin-Stickstoffatomen in der Hauptkette.

Allerdings erfolgte auch dieses neue, unter Abspaltung der Abgangsgruppe X als HX (anstelle von NH₃) ablaufende Polykondensationsverfahren mittels Schmelzpolymerisation, wodurch in den als abgekühlte Schmelze anfallenden Reaktionsprodukten wiederum jeweils ein nicht unbeträchtlicher Anteil an nicht umgesetzten Monomeren BA sowie an nicht einer der obigen Formeln (I) bis (III) entsprechenden Nebenprodukten zurückblieb.

Das Ziel der vorliegenden Erfindung war vor diesem Hintergrund daher die Bereitstellung eines verbesserten Herstellungsverfahrens für die obigen Polyguanidin-Derivate der Formeln (I) bis (III).

### OFFENBARUNG DER ERFINDUNG

Dieses Ziel erreicht die Erfindung durch Bereitstellung eines Verfahrens zur Herstellung von Polykondensationsprodukten von Guanidin, Aminoguanidin oder Diaminoguanidin G mit zumindest einem Benzylderivat BA nach demselben Reaktionsschema wie zuvor: 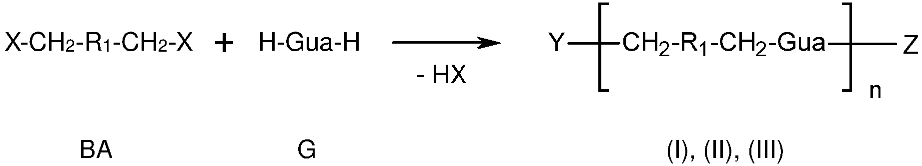
worin X jeweils unabhängig für eine Abgangsgruppe steht, R₁ jeweils unabhängig für ein aromatisches Ringsystem mit zumindest einem aromatischen Ring steht, das gegebenenfalls ein oder mehrere Heteroatome, ausgewählt aus O, N und S enthält und das gegebenenfalls mit einer oder zwei Vinylgruppen substituiert ist, an die die Gruppe(n) -CH₂-X gebunden ist/sind, Gua für einen Guanidindiyl-, Aminoguanidindiyl- oder Diaminoguanidindiyl-Rest steht, Y für H-Gua steht und Z für H steht oder Y und Z zusammen für eine chemische Bindung stehen, um eine zyklische Struktur zu ergeben, und n ≥ 2 ist;
wobei zumindest ein Benzylderivat BA einer Polykondensationsreaktion mit einem Überschuss an Guanidin, Aminoguanidin oder Diaminoguanidin G unter Abspaltung von HX unterzogen wird, um ein Polyguanidin der nachstehenden Formel (I), (II) oder (III): 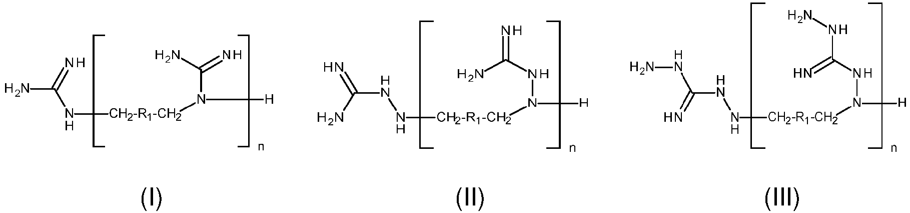
oder mit einer durch Ringschluss unter Eliminierung eines entsprechenden Guanidins erhaltenen zyklischen Struktur, oder ein Salz des Polyguanidins zu ergeben;
wobei das neue Verfahren nun allerdings dadurch gekennzeichnet ist, dass
das zumindest eine Benzylderivat BA und das jeweilige Guanidin G in einem bei Normaldruck über 150 °C siedenden, polaren aprotischen Lösungsmittel suspendiert und auf eine Temperatur von zumindest 150 °C erhitzt und dabei gelöst werden, wonach das Reaktionsgemisch abgekühlt und entweder a) mit einem Nicht-Lösungsmittel für das Polyguanidin der Formel (I), (II) oder (III) versetzt wird, um das Produkt auszufällen und in fester Form zu erhalten, oder b) mit einem Gemisch aus Wasser und einem mit Wasser nicht mischbaren apolaren Lösungsmittel versetzt und extrahiert wird, um eine wässrige Lösung des Produkts zu erhalten.

Zwar hätte auch das Verfahren nach dem Stand der Technik nicht notwendigerweise in der Schmelze durchgeführt werden müssen, wie auf Seite 7 der zuvor zitierten WO 2016/015081 A1 erwähnt wird. Allerdings wird ebendort auch offenbart, dass aus Gründen der Verfahrensökonomie Schmelzpolymerisation die bevorzugte Reaktionsführung ist, weswegen die Beispiele ausschließlich auf diese Weise durchgeführt wurden.

Überraschenderweise haben jedoch die Erfinder in der Zwischenzeit festgestellt, dass aus Gründen der Verfahrensökonomie keineswegs Schmelzpolymerisation zu bevorzugen ist, und das aus mehreren Gründen:
1) Für einen Durchschnittsfachmann auf dem Gebiet der Polymerchemie nicht besonders überraschend, sind die Umsätze der Polykondensation (wie auch die Kettenlängen der Polykondensate) in Gegenwart eines Lösungsmittels für zumindest einen der Reaktionspartner in der Regel - und so auch im vorliegenden Fall - höher, was den Anteil an nicht umgesetztem Monomer BA verringert. Allerdings ist dieser Anteil in den erfindungsgemäßen Polykondensaten überraschenderweise sogar erheblich geringer als nach dem bekannten Schmelzpolymerisationsverfahren.

Genauer gesagt wird in AT 516.070 A1 und WO 2016/015081 A1 das Ergebnis der Schmelzpolymerisation (nach Abkühlen der Schmelze, Wasserzusatz und gründlicher Durchmischung) wie folgt charakterisiert: *"eine klare, leicht gelbliche Lösung mit Spuren fester Anteile",* wobei Letztere nicht umgesetztes BA waren und durch eine 0,2-µm-PFTE-Membran abfiltriert werden mussten.

Wie die Erfinder inzwischen festgestellt haben, bleiben sogar im Falle der Schmelzpolymerisation eines stöchiometrischen 1:2-Gemischs der beiden Ausgangsmonomere knapp 20 % des Monomers BA nicht umgesetzt als fester Rückstand zurück, und Letzteres wurde nach dem Stand der Technik sogar in einem 2,5%igen Überschuss eingesetzt (BA:G 1:1,95 Äquivalente). Im Gegensatz dazu sind es nach dem erfindungsgemäßen Lösungspolymerisationsverfahren nur 3-5 % an nicht umgesetztem BA, wie die späteren Beispiele und Vergleichsbeispiele belegen.

2) Im Falle der erfindungsgemäßen neuen Lösungspolymerisation kann es nicht zur einer Sublimation des Monomers BA kommen, was in der Vergangenheit die Umsätze weiter gesenkt hatte, da ein nicht zu vernachlässigender Anteil der relativ flüchtigen BA-Monomere aus der Schmelze sublimierte.

3) Die nicht umgesetzten BA-Monomere werden im Zuge der Aufarbeitung - sowohl bei Ausfällung aus dem Reaktionsgemisch gemäß Merkmal a) als auch bei Extraktion gemäß Merkmal b) - praktisch vollständig aus den erhaltenen Polyguanidinen entfernt, was deren Reinheit deutlich erhöht, die bereits anhand der schwächeren Färbung der nach dem erfindungsgemäßen Verfahren hergestellten Produkte zu erkennen ist.

4) Die nach dem erfindungsgemäßen Verfahren in reinerer Form als davor hergestellten Polykondensationsprodukte der Formeln (I) bis (III) haben sich zwischenzeitlich als sehr stark hygroskopisch erwiesen, so dass ein längerer Kontakt mit in der Umgebungsluft enthaltenem Wasserdampf zu vermeiden ist, sofern der Erhalt des jeweiligen Produkts als reiner Feststoff gewünscht wird. Gemäß Merkmal a) der vorliegenden Erfindung wird in diesem Fall das Produkt, das als Lösung in dem jeweiligen hochsiedenden, polaren aprotischen Lösungsmittel anfällt, durch Zusatz eines Nicht-Lösungsmittels für das jeweilige Polyguanidin ausgefällt und kann nach Abtrennung von der Lösung sofort unter Luftausschluss gelagert werden.

5) Die Erfinder haben zwischenzeitlich herausgefunden, dass nicht nur die reinen Feststoffe der Polyguanidine der Formeln (I) bis (III), sondern auch wässrige Lösungen davon als Antiinfektivum oder Biozid einsetzbar sind. Vor allem angesichts der starken Hygroskopie stellt dies eine besonders bevorzugte Verwendung dieser Polymere dar. Aus diesem Grund wird gemäß dem alternativen Merkmal b) der vorliegenden Erfindung die Lösung des gewünschten Produkts in dem hochsiedenden, polaren aprotischen Lösungsmittel mit Wasser, vorzugsweise einem Überschuss daran, sowie mit einem mit Wasser nicht mischbaren apolaren Lösungsmittel versetzt und anschließend extrahiert. Dabei geht nicht umgesetztes Restmonomer BA vollständig in die organische Phase über, und das gewünschte Polyguanidin der Formel (I), (II) oder (III) wird unmittelbar als wässrige Lösung erhalten (die gegebenenfalls auch das hochsiedende Reaktionslösungsmittel enthält), die in bestimmten Anwendungen ohne weitere Reinigung oder Aufarbeitung direkt, vor allem *ex vivo,* als Antiinfektivum oder Biozid einsetzbar ist.

6) Und schließlich sind einerseits die Lösungen der Ausgangsmonomere viel leichter zu rühren als die relativ hochviskosen Schmelzen, und andererseits ist die Polykondensationsreaktion deutlich rascher abgeschlossen, was beides den Energieaufwand deutlich verringert.

All dies erhöht die Verfahrensökonomie bei der Herstellung enorm - speziell im Falle des Erhalts der Produkte als wässrige Lösungen, weswegen das Merkmal b) im erfindungsgemäßen Verfahren zu bevorzugen ist, wobei besonders bevorzugt eine 20%-ige oder 10%ige wässrige Lösung des gewünschten Polykondensats der Formel (I), (II) oder (III) hergestellt wird.

In weiteren bevorzugten Ausführungsformen ist R₁ ein gegebenenfalls substituierter Phenylenrest, da die jeweiligen Dichlor- oder Dibromxylole einfach im Handel erhältlich sind, wodurch sich ein vorhergehender Schritt zur Herstellung des jeweiligen BA-Monomers erübrigt. Aus demselben Grund ist die Abgangsgruppe vorzugsweise Chlor oder Brom, noch bevorzugter Chlor, da die bromierten Ausgangsprodukte üblicherweise etwas teurer sind und außerdem die Hydrobromid-Salze der Polykondensate eine etwas stärkere Färbung aufweisen als die entsprechenden Hydrochloride. Weiters wird in bevorzugten Ausführungsformen auch das jeweilige, als Startmonomer ausgewählte Guanidin G als Hydrochlorid eingesetzt, da diese Salze ebenfalls leicht im Handel erhältlich sind.

In weiteren bevorzugten Ausführungsformen werden das jeweilige Benzylderivat BA und das jeweilige Guanidin G in einem Molverhältnis von 1:2 eingesetzt, oder das jeweilige Guanidin G wird in einem geringfügigen stöchiometrischen Überschuss, z.B. in einem Überschuss von 0,5-1 Mol-%, eingesetzt. Dies verringert den Anteil an nicht umgesetztem Monomer BA, zumal im früheren Schmelzpolymerisationsverfahren das Guanidin G ja in einem geringfügigen Unterschuss eingesetzt worden war (1,95 statt 2 mol G pro Mol BA, d.h. 2,5 Mol-% Unterschuss), und erhöht die Ausbeute und Reinheit der Produkte.

Obwohl die Auswahl des hochsiedenden, polaren aprotischen Lösungsmittels gemäß vorliegender Erfindung nicht speziell eingeschränkt ist, solange es einen Siedepunkt über 150 °C aufweist, wird in weiteren bevorzugten Ausführungsformen N-Methylpyrrolidon eingesetzt. Dieses weist einen Siedepunkt von 203 °C auf und braucht daher nicht rückflusserhitzt zu werden, ist auch bei höheren Temperaturen chemisch stabil und zudem unbegrenzt mit Wasser mischbar. Prinzipiell sind natürlich auch andere Vertreter dieser Klasse von Lösungsmitteln geeignet, wie z.B. Dimethylformamid (DMF; Kp.: 153 °C), Dimethylacetamid (DMA; Kp.: 165 °C), Dimethylsulfoxid (DMSO; Kp.: 189 °C), Diethylenglykoldimethylether (Diglyme; Kp.: 160 °C), Triethylenglykoldimethylether (Triglyme; Kp.: 216 °C) oder Propylencarbonat (Kp.: 242 °C), die ebenfalls allesamt mit Wasser mischbar sind.

Zwar sind die Dämpfe aller dieser Lösungsmittel bei Luftkontakt entflammbar, wobei jedoch die Flammpunkte von Diglyme (51 °C) und DMF (58 °C) deutlich unter jenen der übrigen genannten liegen, von denen DMA und NMP als am wenigsten entzündlich gelten. Weiters kann es während der Polykondensation der stark basischen Guanidine zu Zersetzungsreaktionen der Lösungsmittelmoleküle kommen - im Falle von DMF speziell bei Lichteinwirkung, das zudem aufgrund seines niedrigen Siedepunkts von 153 °C entweder unter Rückfluss oder unter Druck erhitzt werden müsste. Unter diesem Aspekt wäre daher neben NMP entweder wiederum DMA oder auch einer der beiden Ether oder Propylencarbonat zu bevorzugen, wobei allerdings NMP bei den erfindungsgemäßen Reaktionstemperaturen von > 150 °C die höchste chemische Stabilität aufweist. Dies wurde auch bereits von den Erfindern experimentell bestätigt, zumal sich sowohl Propylencarbonat als auch Triglyme als bei der Reaktionstemperatur chemisch instabil erwiesen haben (siehe die späteren Vergleichsbeispiele 5 und 6).

Weiters ist in Merkmal a) des erfindungsgemäßen Verfahrens das Nicht-Lösungsmittel für das Polyguanidin nicht speziell eingeschränkt. In bevorzugten Ausführungsformen der Erfindung wird jedoch Ethylacetat (EE) oder Dichlormethan (DCM) eingesetzt, die mit den meisten in Frage kommenden hochsiedenden Lösungsmitteln in weiten Bereichen mischbar und zudem kostengünstig erhältlich sind. Insbesondere wird jedoch EE eingesetzt, speziell wenn die Polykondensation in einem anderen hochsiedenden Lösungsmittel als NMP durchgeführt wird, da bei manchen der anderen geeigneten Vertreter Nebenreaktionen mit halogenierten Kohlenwasserstoffen wie DCM erfolgen könnten, die zudem aus Gründen der Umweltbelastung nicht zu bevorzugen sind.

Die Auswahl des mit Wasser nicht mischbaren apolaren Lösungsmittels in Merkmal b) des erfindungsgemäßen Verfahrens ist ebenfalls nicht speziell eingeschränkt. In bevorzugten Ausführungsformen der Erfindung wird n-Heptan eingesetzt, da es, ähnlich wie seine Homologe Hexan und Pentan, in Wasser praktisch unlöslich ist. Die beiden Letzteren sind allerdings aufgrund der abnehmenden Kettenlängen und Siedepunkte noch flüchtiger und deutlich leichter entzündlich als Heptan, und Hexan ist zudem gesundheitsschädlich. Als Alternativen sind beispielsweise auch Ethylacetat, Diethylether (und deren Propyl-Homologe) möglich, die jedoch mit dem bevorzugten hochsiedenden Lösungsmittel NMP gut mischbar sind, so dass Letzteres in gewissem Ausmaß als Lösungsvermittler fungieren würde.

Die Polymerisationsreaktion wird in bevorzugten Ausführungsformen über einen Zeitraum von zumindest 2 h, noch bevorzugter zumindest 3 h, durchgeführt. Insbesondere wird die Reaktion - in Analogie zum früheren Verfahren der Erfinder - in zwei Stufen bei unterschiedlichen Temperaturen, einer ersten, niedrigeren und einer zweiten, höheren Temperatur, durchgeführt, um für möglichst vollständigen Umsatz und dadurch größere Kettenlängen bei gleichzeitig verringertem Restmonomergehalt zu sorgen. Als besonders effektiv haben sich 2 h bei 160 °C und anschließend 1,5 h bei 180 °C erwiesen, wodurch die bevorzugte Reaktionszeit der vorliegenden Erfindung auch deutlich kürzer ist als jene des früheren Verfahrens (3 h 160 °C, 2 h 180 °C).

In einem zweiten Aspekt betrifft die vorliegende Erfindung auch die gemäß dem neuen Verfahren hergestellten Polyguanidine der obigen Formeln (I), (II) und (III) bzw. mit einer durch Ringschluss unter Eliminierung eines entsprechenden Guanidins erhaltenen zyklischen Struktur sowie Salze dieser Polyguanidine. Aufgrund der deutlich höheren Reinheit der Produkte aufgrund der Entfernung von nicht umgesetzten Monomeren BA aus dem jeweiligen gewünschten Polyguanidin während der Aufarbeitung - und zwar sowohl im Falle der Ausfällung gemäß Merkmal a) als auch der Extraktion gemäß Merkmal b) - sind diese eindeutig von jenen zu unterscheiden, die gemäß dem bisherigen Verfahren, d.h. mittels Schmelzpolymerisation, hergestellt wurden.

In einem dritten Aspekt betrifft die Erfindung wiederum ebendiese Polyguanidine zur Verwendung als Antibiotikum und Antiinfektivum oder Biozid, vorzugsweise zur Bekämpfung von bakteriellen, viralen und Pilz-Infektionen bei einem menschlichen oder tierischen Patienten, noch bevorzugter zur topischen oder systemischen Verabreichung und insbesondere zur Verabreichung in Form eines Arzneimittels oder einer pharmazeutischen Zusammensetzung. Alternativ dazu können die so erhaltenen Polyguanidine aber wiederum auch als antimikrobielle Mittel oder Biozide *ex vivo* eingesetzt werden, vorzugsweise als Wirkkomponente von antimikrobiellen Anstrichen, Beschichtungen, Folien oder Membranen oder dergleichen.

Und in einem vierten Aspekt betrifft die Erfindung erneut ein Arzneimittel oder eine pharmazeutische Zusammensetzung zur Bekämpfung von bakteriellen, viralen und Pilz-Infektionen bei einem menschlichen oder tierischen Patienten, das/die zumindest eines der so hergestellten Polyguanidine als Antiinfektivum umfasst und vorzugsweise weiters zumindest einen pharmazeutisch annehmbaren Träger oder Hilfsstoff und gegebenenfalls ein oder mehrere Adjuvantien und/oder einen oder mehrere andere Wirkstoffe umfasst. Bevorzugt bevorzugt umfasst das Arzneimittel oder die pharmazeutische Zusammensetzung zumindest einen anderen Wirkstoff, der ebenfalls antimikrobiell wirkt, um die Wirkung zu verstärken und etwaige Synergieeffekte zu nutzen. Der zumindest eine andere Wirkstoff kann dabei mitunter auch gegen ein anderes Leiden als eine bakterielle Infektion wirksam sein. Nur als Beispiele seien Antidiarrhoika und so genannte Magenschoner erwähnt.

Nachstehend wird die vorliegende Erfindung anhand von nichteinschränkenden Beispielen näher beschrieben.

### BEISPIELE

Die in den Beispielen und Vergleichsbeispielen eingesetzten Lösungsmittel und Ausgangsmonomere wurden allesamt käuflich erworben und in handelsüblicher Reinheit eingesetzt.

¹H-NMR-Spektren wurden auf einem Avance^{®} AV400-Spektrometer von Bruker bei 400 MHz aufgenommen.

Monoisotopische MALDI-TOF-Massenspektrometrie-Analysen wurde mit einem Autoflex Speed-Instrument von Bruker, ausgestattet mit einem 1000-Hz-Smartbeam^{™}-II-Laser, im Positivionen- und Reflektronmodus mit 6-Aza-2-thiothymin (ATT) als Matrix durchgeführt. MS/MS wurde durch laserinduzierte Dissoziation durchgeführt, wobei der Vorläuferionen-Selektor generell auf ± 0,6 % eingestellt wurde. Die Detektorspannung wurde für MS generell auf 1.977 V eingestellt; Es wurden 1.000-3.000 Aufnahmen aus verschiedenen Regionen der Probenpunkte summiert. Die Spektren wurden mit der Software des Herstellers (Bruker Flexanalysis 3.4) unter Verwendung des SNAP-Algorithmus mit einem Signal/Rauschen-Schwellenwert von 6 für MS (ungeglättet) verarbeitet.

### Beispiel 1

### Herstellung von Polyaminoquanidin (1) - Variante 1 gemäß Merkmal b)

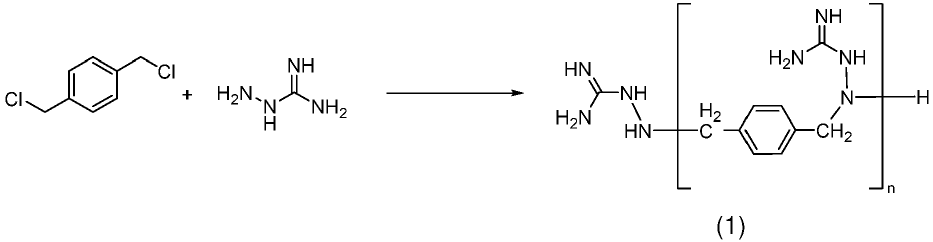

α ,α'-Dichlor-p-xylol (400 mg, 2,28 mmol) und 2 Äquivalente an Aminoguanidin-hydrochlorid (505 mg, 4,56 mmol) wurden in einem mit Rückflusskühler und Trockenrohr ausgestatten Reaktionsgefäß unter magnetischem Rühren in 2 ml N-Methylpyrrolidon (NMP) suspendiert und erhitzt, wobei sich eine niederschlagsfreie, klare, blassgelbe Lösung bildete. Es wurde zunächst 2 h lang auf 160 °C und danach 1,5 h lang auf 180 °C erhitzt. Nach dem Abkühlen des Reaktionsgemischs wurden 6,1 ml dest. Wasser zugesetzt, und das Gemisch wurde mit 50 ml n-Heptan (Hep) versetzt und extrahiert, um nicht umgesetztes Dichlorxylol zu entfernen und eine im Wesentlichen reine 10%ige (Gew.-%) Lösung des Hydrochlorids von Polyguanidin (1) in einem ca. 3:1-Gemisch aus Wasser und NMP zu erhalten.

Durch Eindampfen der Hep-Lösung und Trocknen im Vakuum wurden 13,2 mg (3,3 % der eingesetzten Menge) festes Dichlor-p-xylol als gelblicher Rückstand erhalten.

Zu Analysezwecken wurde ein Teil der Wasser/NMP-Lösung mit Ethylacetat (EE) versetzt, um das Produkt als leicht cremefarbenen, gummiartigen Niederschlag zu erhalten, der mit EE und Hep gewaschen und im Hochvakuum getrocknet wurde, was einen stark hygroskopischen, leicht cremefarbenen Schaum ergab, der mittels ¹H-NMR und MALDI-TOF-MS charakterisiert wurde.

¹H-NMR (D₂O; 4,4-Dimethyl-4-silapentan-1-sulfonsäure, DSS, als interner Standard) δ (ppm): 3,72-3,92 (ad, J=12,4 Hz), 3,93-4,08 (as), 4,11-4,23 (ad, J=12,4 Hz), 4,28-4,38 (m), 4,45-4,52 (m), 7,30-7,60 (m), 8,08 (as).

MALDI-TOF (m/z): 425,4, 470,4, 529,4, 563,4, 601,4, 646,4, 705,5, 741,5, 777,5, 822,5, 858,6, 894,6, 953,7, 1034,7, 1093,7, 1129,8, 1210,8, 1305,9, 1386,9, 1482,0, 1563,1, 1658,1, 1834,2, 2010,2.

Die Positionen der Peaks im ¹H-NMR-Spektrum, die ziemlich genau jenen des nach dem Schmelzpolymerisationsverfahren erhaltenen Produkts entsprechen, bestätigen den Erhalt von Polyguanidin (1).

### Beispiel 2

### Herstellung von Polyaminoquanidin (1) - Variante 2 gemäß Merkmal a)

Die Lösungpolymerisation der Ausgangsmonomere wurde analog zu Beispiel 1 durchgeführt. Nach dem Abkühlen des Reaktionsgemischs wurden im vorliegenden Fall jedoch der erneut entstandenen klaren, blassgelben Lösung direkt 30 ml EE zugesetzt, um das Produkt auszufällen. Der cremefarbene, gummiartige Niederschlag wurde mit EE und Hep gewaschen und im Hochvakuum getrocknet, wobei wiederum ein hygroskopischer, leicht cremefarbener Schaum erhalten wurde, dessen ¹H-NMR- und MALDI-TOF-Spektren mit jenen aus Beispiel 1 übereinstimmten.

Die EE/NMP-Lösung wurde mit 50 ml Hep versetzt und extrahiert, um nicht umgesetztes Dichlorxylol abzutrennen. Eindampfen der Hep-Lösung und Trocknen im Vakuum ergaben 16,4 mg (4,1 % der Ausgangsmenge) eines gelblichen Rückstands aus festem Dichlor-p-xylol.

### Beispiel 3

### Herstellung von Polyaminoquanidin (2) - Variante 1 gemäß Merkmal b)

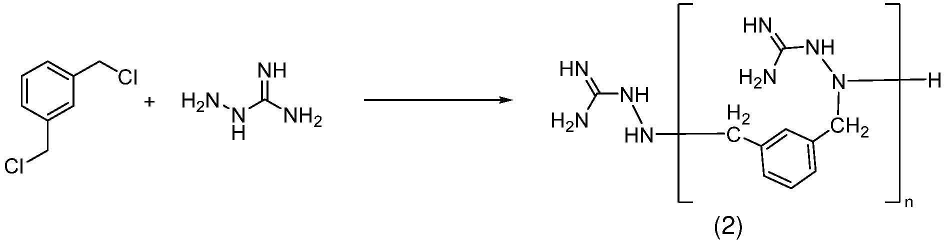

Beispiel 3 wurde auf analoge Weise wie Beispiel 1 durchgeführt, wobei α,α'-Dichlor-m-xylol (400 mg, 2,28 mmol) anstelle von α,α'-Dichlor-p-xylol eingesetzt wurde. Nach Abschluss der Reaktion nach insgesamt 3,5 h Erhitzen unter Rühren und Abkühlen des Reaktionsgemischs wurden auch in diesem Fall Wasser und Hep zugesetzt, und die Wasser/NMP-Phase wurde mit Hep extrahiert.

Eindampfen der Hep-Phase und Trocknen im Vakuum ergaben 17,2 mg (4,3 %) festes Dichlor-m-xylol als gelblichen Rückstand.

Wiederum wurde ein Teil der Wasser/NMP-Lösung mit EE versetzt, um einen leicht cremefarbenen, gummiartigen Niederschlag zu erhalten, der mit EE und Hep gewaschen und im Hochvakuum zu einem stark hygroskopischen, leicht cremefarbenen Schaum getrocknet wurde, der mittels ¹H-NMR und MALDI-TOF-MS charakterisiert wurde.

¹H-NMR (D₂O; 4,4-Dimethyl-4-silapentan-1-sulfonsäure, DSS, als interner Standard) δ (ppm): 3,77-3-94 (ad, J=12,5 Hz), 3,97-4,09 (as), 4,14-4,25 (ad, J=12,5 Hz), 4,31-4,40 (m), 4,48-4,56 (m), 7,20-7,70 (m), 8,11 (as).

MALDI-TOF (m/z): 425,4, 470,4, 529,4, 563,4, 601,4, 646,4, 705,5, 741,5, 777,5, 822,5, 858,6, 894,6, 953,7, 1034,7, 1093,7, 1129,8, 1210,8, 1305,9, 1386,9, 1482,0, 1563,1, 1658,1, 1834,2, 2010,2.

Wiederum entsprechen die Positionen der Peaks im ¹H-NMR-Spektrum recht genau den für das nach dem Schmelzpolymerisationsverfahren erhaltenen Produkt publizierten und bestätigen somit den Erhalt von Polyguanidin (2).

### Beispiel 4

### Herstellung von Polyaminoquanidin (2) - Variante 2 (gemäß Merkmal a))

Die Lösungpolymerisation der Monomere wurde analog zu Beispiel 3. Nach dem Abkühlen des Reaktionsgemischs wurde jedoch EE zugesetzt, um das Produkt als cremefarbenen, gummiartigen Niederschlag auszufällen, der mit EE und Hep gewaschen und im Hochvakuum getrocknet wurde, wobei wiederum ein hygroskopischer, leicht cremefarbener Schaum erhalten wurde, dessen ¹H-NMR- und MALDI-TOF-Spektren mit jenen aus Beispiel 3 übereinstimmten.

Die EE/NMP-Lösung wurde mit Hep versetzt und extrahiert, um nicht umgesetztes Dichlorxylol abzutrennen. Eindampfen der Hep-Lösung und Trocknen im Vakuum ergaben 19,7 mg (4,9 %) eines gelblichen Rückstands aus festem Dichlor-m-xylol.

### Vergleichsbeispiel 1

### Herstellung von Polyaminoquanidin (1) - Schmelzpolymerisation

α,α'-Dichlor-p-xylol (25,00 g, 142,81 mmol) und 2 Äquivalente an Aminoguanidin-hydrochlorid (31,57 g, 285,62 mmol) wurden in einem offenen Reaktionsgefäß unter Rühren zunächst 3 h lang auf 160 °C, danach 2 h lang auf 180 °C erhitzt. Nach dem Abkühlen der Schmelze auf unter 60 °C wurden 500 ml Wasser zugesetzt, und nach gründlichem Durchmischen mittels Rühren und Ultraschallbehandlung für 2 h wurde ein gelblicher Niederschlag und eine klare, gelbliche Lösung als Überstand erhalten. Dazu wurden 400 ml n-Heptan (Hep) zugesetzt, gut durchmischt und ausgeschüttelt, wonach die Phasen getrennt wurden.

Zu Analysezwecken wurde ein Teil der wässrigen Lösung im Hochvakuum eingedampft, was einen stark hygroskopischen, blassgelben amorphen Rückstand ergab, der in D₂O gelöst und mittels ¹H-NMR charakterisiert wurde.

¹H-NMR (D₂O; 4,4-Dimethyl-4-silapentan-1-sulfonsäure, DSS, als interner Standard) δ (ppm): 3,73-3,93 (ad, J=12,3 Hz), 3,94-4,06 (as), 4,12-4,23 (ad, J=12,3 Hz), 4,27-4,38 (m), 4,47-4,52 (m), 7,30-7,72 (m), 8,09 (as).

Die chemischen Verschiebungen dieser Peaks entsprechen ziemlich genau den im Stand der Technik veröffentlichten als auch jenen der in den Beispielen 1 und 2 erhaltenen Polyguanidine (1).

Durch Eindampfen der nach der Extraktion erhaltenen Hep-Phase und Trocknen des Rückstands im Vakuum wurden 4,83 g festes Dichlor-p-xylol als gelblicher Rückstand erhalten, was 19,3 % der eingesetzten Menge entsprach.

### Vergleichsbeispiel 2

### Herstellung von Polyaminoquanidin (2) - Schmelzpolymerisation

Auf analoge Weise wie in Vergleichsbeispiel 1 wurde aus α,α'-Dichlor-m-xylol und Aminoguanidin-hydrochlorid das Hydrochlorid von Polyguanidin (2) als klare, gelbliche Lösung in Wasser sowie nicht umgesetztes Dichlor-m-xylol als Hep-Lösung erhalten.

Ein Teil der wässrigen Lösung wurde wiederum im Hochvakuum eingedampft, was einen hygroskopischen, gelblichen amorphen Rückstand ergab, der ebenfalls in D₂O gelöst und mittels ¹H-NMR charakterisiert wurde.

¹H-NMR (D₂O; 4,4-Dimethyl-4-silapentan-1-sulfonsäure, DSS, als interner Standard) δ (ppm): 3,70-3,96 (m), 3,93-4,05 (as), 4,09-4,22 (ad, J=12,6 Hz), 4,30-4,37 (m), 4,46-4,52 (m), 7,21-7,80 (m), 8,09 (as).

Die Positionen dieser Peaks entsprechen recht genau jenen der in den Beispielen 3 und 4 erhaltenen Polyguanidine (2) und auch den im Stand der Technik veröffentlichten.

Eindampfen der erhaltenen Hep-Phase und Trocknen des Rückstands im Vakuum ergaben 4,97 g (19,9 % der eingesetzten Menge) festes Dichlor-p-xylol als gelblichen Rückstand.

### Vergleichsbeispiele 3 bis 8

### Herstellung von Polyaminoquanidin (1) - Variation des Lösungsmittels

Derselbe Ansatz wie in Beispiel 1, d.h. 400 mg (2,28 mmol) α,α'-Dichlor-p-xylol und 505 mg (5,20 mmol) Aminoguanidin-hydrochlorid, wurde als Reaktionsgemisch in einem mit Rückflusskühler und Trockenrohr ausgestatten Reaktionsgefäß vorgelegt, mit jeweils einem von verschiedenen Lösungsmitteln versetzt und unter magnetischem Rühren erhitzt. Details und die damit erzielten Ergebnisse sind nachstehend für jeden Versuch angeführt.

### Vergleichsbeispiel 3 - Ethanol

Das obige Reaktionsgemisch wurde mit 15 ml Ethanol versetzt und 5 h lang rückflusserhitzt (EtOH; Kp.: 78 °C). Beim Erhitzen bildete sich eine klare, farblose Lösung. Nach dem Abkühlen wurde das Lösungsmittel vollständig abgedampft, wobei ein fester Niederschlag zurückblieb.

Dieser wurde mit 50 ml Wasser und 50 ml n-Heptan versetzt und ausgeschüttelt, wonach die beiden Phasen getrennt und jeweils bis zur Trockene eingedampft wurden, wobei feste Rückstände zurückblieben. Jeweils eine Probe davon wurde in D₂O bzw. CDCl₃ gelöst und mittels ¹H-NMR untersucht, wobei sich zeigte, dass beim Erhitzen keine Polykondensationsreaktion stattgefunden hatte, da die charakteristischen Signale des in den Beispielen 1 und 2 erhaltenen Polyguanidins (1) nicht festgestellt werden konnten.

### Vergleichsbeispiel 4 - Propanol

Das obige Reaktionsgemisch wurde mit 15 ml 1-Propanol versetzt und 6 h lang rückflusserhitzt (PrOH; Kp.: 97 °C). Beim Erhitzen bildete sich eine klare, farblose Lösung. Nach dem Abkühlen wurde das Lösungsmittel vollständig abgedampft, wobei ein fester Niederschlag zurückblieb.

Dieser wurde wiederum mit 50 ml Wasser und 50 ml n-Heptan versetzt und ausgeschüttelt, wonach die beiden Phasen getrennt und jeweils bis zur Trockene eingedampft wurden, wobei feste Rückstände zurückblieben. Jeweils eine Probe davon wurde in D₂O bzw. CDCl₃ gelöst und mittels ¹H-NMR untersucht, wobei sich auch in diesem Fall zeigte, dass keine Polykondensationsreaktion stattgefunden hatte, da keine für Polyguanidin (1) charakteristischen Signale festgestellt wurden.

### Vergleichsbeispiel 5 - Propylencarbonat, Versuch A

Das obige Reaktionsgemisch wurde mit 8 ml Propylencarbonat versetzt und 2 h lang auf 140 °C erhitzt (Kp.: 242 °C). Beim Erhitzen bildete sich eine klare, cremefarbene Lösung.

Nach dem Abkühlen wurden 50 ml Wasser und 50 ml n-Heptan zugesetzt, und das Gemisch wurde ausgeschüttelt, wonach die Phasen getrennt wurden und die organische Phase bis zur Trockene eingedampft wurde. Der gelbliche feste Rückstand erwies sich im ¹H-NMR-Spektrum als 342 mg reines Dichlorxylol, was 85,5 % des Ausgangsmonomers darstellt. Es waren folglich bei 140 °C nur 14,5 % Umsatz erfolgt.

### Vergleichsbeispiel 6 - Propylencarbonat, Versuch B

Das obige Reaktionsgemisch wurde erneut mit 8 ml Propylencarbonat versetzt und 2 h lang auf 140 °C erhitzt, wobei wiederum eine klare, cremefarbene Lösung entstand, die anschließend auf 160 °C erhitzt wurde. Nach nur etwa 10 min bei 160 °C bildete sich allerdings rasch eine dunkel gefärbte Suspension. Nach Abschalten des Rührers setzte sich ein dunkelbrauner Niederschlag am Boden ab, der sowohl in Wasser als auch in Propylencarbonat unlöslich war.

Ohne sich auf eine bestimmte Theorie festlegen zu wollen, nehmen die Erfinder an, dass es zu einer Spaltung des Lösungsmittel-Moleküls sowie nicht näher untersuchten Nebenreaktionen mit dem Dichlorid und dem Guanidin gekommen war.

### Vergleichsbeispiel 7 - Triethylenglykoldimethylether, Versuch A

Das obige Reaktionsgemisch wurde mit 6 ml Triethylenglykoldimethylether versetzt und 2 h lang auf 140 °C erhitzt (Triglyme; Kp.: 216 °C), wobei sich allerdings kurz nach Erreichen der gewünschten Temperatur eine zweite, braun gefärbte, flüssige Phase bildete.

Nach Ablauf der 2 h und Abkühlen des Gemischs wurden 5 ml Wasser zugesetzt und gut durchmischt, wonach die so erhaltene trübe Lösung durch Celite filtriert wurde, wobei ein brauner Filterkuchen zurückblieb, der mit n-Heptan nachgewaschen wurde. Das zweiphasige Filtrat wurde ausgeschüttelt, wonach die Phasen getrennt und bis zur Trockene eingedampft wurden, wobei jeweils feste Rückstände zurückblieben. Analysen derselben mittels ¹H-NMR bzw. MALDI-TOF ergaben rund 40 % nicht umgesetztes Dichlorid in der Hep-Phase und rund 50 % des gewünschten Polyguanidins (1) in der wässrigen Phase.

### Vergleichsbeispiel 8 - Triethylenglykoldimethylether, Versuch B

Versuch A wurde wiederholt, wobei in diesem Fall jedoch gleich auf 160 °C erhitzt wurde, um zu untersuchen, ob sich durch die höhere Temperatur der Umsatz zum gewünschten Polyguanidin (1) steigern ließe. Bei dieser Temperatur färbte sich das Gemisch jedoch nach kurzer Zeit nicht nur braun, sondern allmählich schwarz.

Nach 2 h bei 160 °C wurden wiederum 5 ml Wasser zugesetzt und gut durchmischt, und die so erhaltene trübe Lösung wurde durch Celite filtriert, wobei ein schwarzer Filterkuchen zurückblieb - allerdings eine deutlich größere Menge als zuvor in Versuch A, weswegen sich eine nähere Untersuchung dieses Rückstands erübrigte.

Auch in diesem Fall, also unter Verwendung von Triglyme als Lösungsmittel, ist wohl davon auszugehen, dass es bei den erhöhten Temperaturen zu Spaltungen der Lösungsmittelmoleküle und (ebenfalls nicht näher untersuchten) Nebenreaktionen mit dem Dichlorid und dem Guanidin gekommen war. Ob Triglyme in Gegenwart der beiden Ausgangsmonomere eventuell bei einer niedrigeren Polymerisationstemperatur, wie z.B. 120 °C, als Lösungsmittel geeignet wäre, wurde zwar bislang nicht untersucht, ist aber angesichts der obigen Resultate einerseits unwahrscheinlich und würde zudem andererseits die Reaktionsdauer und damit die Wirtschaftlichkeit des Verfahrens unvorteilhaft verlängern.

In all den praktischen Experimenten hat sich somit N-Methylpyrrolidon zur Verwendung als hochsiedendes, polares aprotisches Lösungsmittel im Lösungspolymerisationsverfahren der vorliegenden Erfindung bestens bewährt - ohne die Erfindung darauf einschränken zu wollen.

Der Fachmann kann daher auch mit an Sicherheit grenzender Wahrscheinlichkeit davon ausgehen, dass auch die übrigen von der Definition der Formeln (I), (II) und (III) gemäß vorliegender Erfindung umfassten Polyguanidine auf analoge und somit erfindungsgemäß vorteilhafte Weise herstellbar sein werden, zumal diese auch auf völlig analoge Weise nach dem damaligen Schmelzpolymerisationsverfahren hergestellt wurden.

In mehreren ersten Aktivitätstests haben sich die nach dem neuen Verfahren hergestellten Polyguanidine auch als wirksamere Biozide erwiesen als die nach dem alten Schmelzpolymerisationsverfahren erhaltenen Polymere, was die Erfinder, ohne sich darauf festlegen zu wollen, auf die höhere Reinheit zurückführen. Die Durchführung reproduzierbarer genauerer Tests ist derzeit Gegenstand der Forschungsarbeit der Erfinder.

Das Lösungspolymerisationsverfahren der vorliegenden Erfindung, das rein formal eine Auswahl aus den in AT 516.070 A1 und WO 2016/015081 A1 implizit offenbarten Verfahrensvarianten darstellt, ermöglicht somit die Herstellung derselben Polyguanidine, jedoch auf deutlich vorteilhaftere Weise. Sie übertrifft das dort aufgrund von "Gründen der Verfahrensökonomie" als bevorzugt offenbarte - und damals als einzige Variante tatsächlich durchgeführte - Schmelzpolymerisationsverfahren, wie schon zuvor erwähnt, in mehreren Aspekten:
i) die Umsätze und die Reinheit der Produkte sind deutlich höher als nach dem Stand der Technik;
ii) die Produkte werden in signifikant kürzerer Zeit erhalten, selbst wenn sie bei denselben Temperaturen polykondensiert werden;
iii) die als Lösungen vorliegenden Reaktionsgemische sind erheblich leichter zu rühren, was ebenfalls den Energieverbrauch senkt; und
iv) in bevorzugten Ausführungsformen der Erfindung gemäß Merkmal b) werden die Produkte als wässrige Lösungen erhalten, die direkt dem beabsichtigten Verwendungszweck als Antiinfektivum oder Biozid zugeführt werden können.

Vom Gesichtspunkt der Verfahrensökonomie ist die vorliegende Erfindung dem Stand der Technik somit jedenfalls klar überlegen - und stellt die Produkte zudem in höherer Reinheit bereit.

## Patentansprüche

1. Verfahren zur Herstellung von Polykondensationsprodukten von Guanidin, Aminoguanidin oder Diaminoguanidin G mit zumindest einem Benzylderivat BA nach dem folgenden Reaktionsschema: 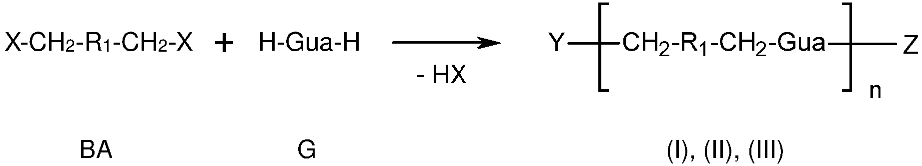
worin X jeweils unabhängig für eine Abgangsgruppe steht, R₁ jeweils unabhängig für ein aromatisches Ringsystem mit zumindest einem aromatischen Ring steht, das gegebenenfalls ein oder mehrere Heteroatome, ausgewählt aus O, N und S enthält und das gegebenenfalls mit einer oder zwei Vinylgruppen substituiert ist, an die die Gruppe(n) -CH₂-X gebunden ist/sind, Gua für einen Guanidindiyl-, Aminoguanidindiyl- oder Diaminoguanidindiyl-Rest steht, Y für H-Gua steht und Z für H steht oder Y und Z zusammen für eine chemische Bindung stehen, um eine zyklische Struktur zu ergeben, und n ≥ 2 ist;
wobei zumindest ein Benzylderivat BA einer Polykondensationsreaktion mit einem Überschuss an Guanidin, Aminoguanidin oder Diaminoguanidin G unter Abspaltung von HX unterzogen wird, um ein Polyguanidin der nachstehenden Formel (I), (II) oder (III): 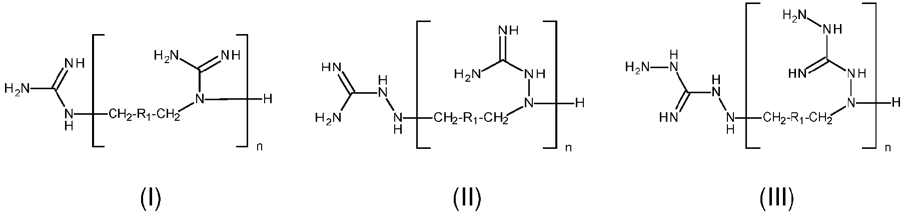
oder mit einer durch Ringschluss unter Eliminierung eines entsprechenden Guanidins erhaltenen zyklischen Struktur, oder ein Salz des Polyguanidins zu ergeben;
**dadurch gekennzeichnet, dass**
das zumindest eine Benzylderivat BA und das jeweilige Guanidin G in einem bei Normaldruck über 150 °C siedenden, polaren aprotischen Lösungsmittel suspendiert und auf eine Temperatur von zumindest 150 °C erhitzt und dabei gelöst werden, wonach das Reaktionsgemisch abgekühlt und entweder a) mit einem Nicht-Lösungsmittel für das Polyguanidin der Formel (I), (II) oder (III) versetzt wird, um das Produkt auszufällen und in fester Form zu erhalten, oder b) mit einem Gemisch aus Wasser und einem mit Wasser nicht mischbaren apolaren Lösungsmittel versetzt und extrahiert wird, um eine wässrige Lösung des Produkts zu erhalten.

2. Verfahren nach Anspruch 1, **dadurch gekennzeichnet, dass**:
a) R₁ ein gegebenenfalls substituierter Phenylenrest ist; und/oder
b) die Abgangsgruppe Chlor ist; und/oder
c) das jeweilige Guanidin G als Hydrochlorid eingesetzt wird; und/oder
d) das jeweilige Benzylderivat BA und das jeweilige Guanidin G in einem Molverhältnis von 1:2 eingesetzt werden oder das jeweilige Guanidin G in einem geringfügigen stöchiometrischen Überschuss, z.B. in einem Überschuss von 0,5-1 Mol-%, eingesetzt wird.

3. Verfahren nach Anspruch 1 oder 2, **dadurch gekennzeichnet, dass**
a) das hochsiedende, polare aprotische Lösungsmittel N-Methylpyrrolidon ist;
und/oder
b1) das Nicht-Lösungsmittel für das Polyguanidin Ethylacetat oder Dichlormethan ist oder
b2) das mit Wasser nicht mischbare apolare Lösungsmittel n-Heptan ist.

4. Verfahren nach einem der Ansprüche 1 bis 3, **dadurch gekennzeichnet, dass** das Polyguanidin der Formel (I), (II) oder (III) durch Extraktion als wässrige Lösung, gegebenenfalls als 10%ige wässrige Lösung, erhalten wird.

5. Verfahren nach einem der Ansprüche 1 bis 4, **dadurch gekennzeichnet, dass**
a) die Reaktion über einen Zeitraum von zumindest 2 h oder zumindest 3 h durchgeführt wird; und/oder
b) das Reaktionsgemisch zunächst auf eine niedrigere und anschließend auf eine höhere Reaktionstemperatur erhitzt wird, wobei das Reaktionsgemisch gegebenenfalls zunächst 2 h lang auf 160 °C und anschließend 1,5 h lang auf 180 °C erhitzt wird.

6. Polyguanidin der Formel (I), (II) oder (III), das durch ein Verfahren nach einem der Ansprüche 1 bis 5 erhalten wurde.

7. Polyguanidin nach Anspruch 6, das durch ein Verfahren nach Anspruch 4 oder 5 in Form einer wässrigen Lösung erhalten wurde.

8. Polyguanidin nach Anspruch 6 oder wässrige Lösung des Polyguanidins nach Anspruch 7 zur Verwendung als Antiinfektivum oder Biozid.

9. Polyguanidin zur Verwendung nach Anspruch 8, **dadurch gekennzeichnet, dass** das Polyguanidin zur Bekämpfung bakterieller, viraler oder Pilz-Infektionen bei einem menschlichen oder tierischen Patienten dient, wobei das Polyguanidin gegebenenfalls zur topischen oder systemischen Verabreichung, gegebenenfalls zur Verabreichung in Form eines Arzneimittels oder einer pharmazeutischen Zusammensetzung, dient.

10. Verwendung eines Polyguanidins nach Anspruch 6 oder einer wässrigen Lösung des Polyguanidins nach Anspruch 7 als antimikrobielles Mittel oder Biozid *ex vivo.*

11. Verwendung nach Anspruch 10, **dadurch gekennzeichnet, dass** das Polyguanidin als Wirkkomponente von antimikrobiellen Anstrichen, Beschichtungen, Folien oder Membranen dient.

12. Arzneimittel oder pharmazeutische Zusammensetzung zur Bekämpfung bakterieller Infektionen bei einem menschlichen oder tierischen Patienten, das/die ein Polyguanidin nach Anspruch 6, gegebenenfalls in Form einer wässrigen Lösung nach Anspruch 7, als Antiinfektivum umfasst.

13. Arzneimittel oder pharmazeutische Zusammensetzung nach Anspruch 12, **dadurch gekennzeichnet, dass** es/sie weiters zumindest einen (weiteren) pharmazeutisch annehmbaren Träger oder Hilfsstoff und gegebenenfalls einen oder mehrere andere Wirkstoffe umfasst.

14. Arzneimittel oder pharmazeutische Zusammensetzung nach Anspruch 13, **dadurch gekennzeichnet, dass** es/sie zumindest einen anderen Wirkstoff umfasst, der ebenfalls antiinfektiv wirkt und der gegebenenfalls gegen ein anderes Leiden als eine bakterielle Infektion wirksam ist.
